# EUROPÄISCHE PATENTSCHRIFT

(11) **EP 1 568 009 B1**
(45) Veröffentlichungstag und Bekanntmachung des Hinweises auf die Patenterteilung: **03.01.2007**
(21) Anmeldenummer: 03775388.6
(22) Anmeldetag: 24.11.2003
(51) Int. Cl.: G10L 15/00, G10L 15/26

(54) **AUSWAHL DER BENUTZERSPRACHE AN EINEM REIN AKUSTISCH GESTEUERTEN TELEFON**
SELECTION OF A USER LANGUAGE ON A PURELY ACOUSTICALLY CONTROLLED TELEPHONE
SELECTION DE LA LANGUE SUR UN TELEPHONE A COMMANDE ENTIEREMENT VOCALE

(30) Priorität: 05.12.2002 DE 10256935
(43) Veröffentlichungstag der Anmeldung: 31.08.2005
(73) Patentinhaber: SIEMENS AKTIENGESELLSCHAFT, 80333 München (DE)
(72) Erfinder: PFLAUM, Karl-Heinz, 46395 Bocholt (DE); KLINKE, Stefano, Ambrosius, 50169 Kerpen (DE); KAMPERSCHROER, Erich, 46499 Hamminkeln (DE); KUNSTMANN, Niels, 85540 Haar (DE); AUBAUER, Roland, 81669 München (DE)
(86) Internationale Anmeldenummer: PCT/EP2003/013182
(87) Internationale Veröffentlichungsnummer: WO 2004/051625

(56) Entgegenhaltungen:
- GB-A- 2 338 369
- US-A- 6 125 341
- US-A1- 2002 082 844

## Beschreibung

Bei Kommunikations- und Informationsgeräten werden textuelle Informationen in der durch die Länderversion vorgegebenen Sprache dargestellt. Damit einhergehend gibt es für den Benutzer die Möglichkeit, die gewünschte Sprache als Benutzersprache oder Bediensprache einzustellen. Wenn jetzt - aus welchem Grund auch immer - die Sprache der Benutzeroberfläche verstellt ist, steht der Benutzer vor dem Problem, die gewünschte Benutzersprache wieder einzustellen, ohne dass er zu dem betreffenden Menüeintrag oder Steuerungszustand durch textuelle Rückmeldungen geführt werden kann.

Dieses Problem besteht allgemein und ist nicht auf grafische Benutzeroberfläche mit Tastatur- oder Mauseingabe beschränkt. Im Gegenteil wird es in Zukunft mehr und mehr Endgeräte geben, die rein akustisch bedient werden. Auch bei Call-Centern, bei denen ebenfalls eine rein akustische Bedienung vorgenommen wird, stellt sich das Problem. Dabei erfolgt die Spracheingabe über Spracherkennung und die Sprachausgabe entweder durch Abspielen vorgefertigter Sprachkonserven oder durch automatisierte Sprachsynthese in Form einer Text-zu-Sprache-Umwandlung.

Bei Geräten mit Bildschirm- bzw. Display- und Tastatureingabe findet man zur Lösung des dargestellten Problems folgende Vorgehensweise: Im Allgemeinen gibt es die Möglichkeit, das Gerät auf die werkseitig vorhandene Spracheinstellung zurückzusetzen. Dies erfolgt meist durch eine bestimmte Tastenkombination. Ebenso gibt es Geräte, bei denen sich auf einfache Weise ein Sprachmenü aktivieren lässt, indem der Benutzer die Zielsprache auswählen kann. Das sieht dann etwa wie folgt aus:

**Tabelle 1**

| |
|---|
| Deutsch |
| Français |
| English |
| yκpaïHe 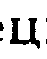 b (Ukrainisch) |
| Romänesc (Rumänisch) |
| ... |

In diesem Menü kann der Benutzer nun die gewünschte und damit einzustellende Benutzersprache auswählen. Eine solche Vorgehensweise ist für rein akustisch gesteuerte Geräte natürlich nicht möglich.

Ein weiteres Beispiel zum Einstellen einer Benutzersprache, um ein sprachgesteuertes Gerät zu bedienen, wird in der Patentschrift US-A-2002/0082844 offenbart.

Davon ausgehend liegt der Erfindung die Aufgabe zugrunde, die Auswahl der Benutzersprache einer Vorrichtung mittels eines rein akustischen Verfahrens zu ermöglichen. Die Auswahlmöglichkeit soll auch gerade dann zur Verfügung stehen, wenn die Vorrichtung keine Unterstützung durch eine Anzeige leisten kann oder soll.

Diese Aufgabe wird durch die in den unabhängigen Ansprüchen angegebenen Erfindungen gelöst. Vorteilhafte Ausgestaltungen ergeben sich aus den Unteransprüchen. Durch die Erfindung kann die einzustellende Benutzersprache einer Vorrichtung einfach dadurch eingestellt werden, dass zur Auswahl der Benutzersprache einfach die einzustellende Benutzersprache gesprochen wird. Ein Engländer sagt also: "English", ein Deutscher sagt einfach "Deutsch", ein Franzose sagt "Français" und ein Ukrainer sagt "Ukrajins'kyj" (englische Transliteration von "ukrainisch" in polnischer Schrift).

Die Realisierung dieser Funktionalität in den Spracherkennungsmitteln der Vorrichtung ist keineswegs trivial, weshalb im Folgenden bevorzugte Möglichkeiten genauer dargestellt werden sollen.

Eine Möglichkeit besteht darin, einen Einzelworterkenner auf die zu erkennenden Bezeichnungen der einstellbaren Benutzersprachen zu trainieren. Da die hier verwendeten Algorithmen zumeist auf bloßem Mustervergleich basieren, benötigt man für das Training eine ausreichende Anzahl von Sprachkonserven, in denen die Sprache (als Wort) von muttersprachlichen Sprechern zu der entsprechenden Sprache (als Code) aufgesprochen ist. Hierbei kann insbesondere ein Dynamic-Time-Warp ("DTW")-Erkenner zu Einsatz kommen.

Sollte die Vorrichtung, etwa für andere Funktionalitäten, bereits über eine phonembasierte Spracherkennung verfügen, so ist es vorteilhaft, diese für das Einstellen der Benutzersprache heranzuziehen. Dazu ergeben sich drei Möglichkeiten.

So kann in den Spracherkennungsmitteln ein multilinguales Hidden-Markov-Modell ("HMM") zur Anwendung kommen, das die Phoneme aller Sprachen modelliert. Hierfür ist eine standardisierte Darstellung eines phonetischen Alphabets besonders vorteilhaft, etwa in der Form von SAMPA-Phonemen.

So überzeugend dieser Ansatz für die geschilderte Problemstellung ist, zeigen sich doch in der Praxis multilinguale Spracherkennungsmittel bezüglich der Erkennungsrate einer sprachspezifischen Modellierung unterlegen. Für die normale Spracherkennung in der Vorrichtung würde also noch ein weiteres akustisches Modell benötigt, welches weiteren Speicherplatz verbräuchte.

Deshalb erweist sich eine andere Möglichkeit als vorteilhaft, bei der die zu den Bezeichnungen der einstellbaren Benutzersprachen gehörigen Phonemsequenzen aus den HMMs für die unterschiedlichen Sprachen kombiniert sind. Hierbei muss allerdings bedacht werden, dass die Übereinstimmungsmaße, die die Spracherkennung für die in unterschiedlichen Phoneminventaren modellierten Wörter liefert, nicht direkt miteinander vergleichbar sind. Dieses Problem kann umgangen werden, wenn im kombinierten HMM die Übereinstimmungsmaße für die Phonemsequenzen aus den unterschiedlichen erkennbaren Benutzersprachen skaliert sind.

Eine besonders geschickte Möglichkeit ergibt sich, wenn man statt eines multilingualen HMMs oder der Kombination von Phonemsequenzen mehrerer sprachspezifischer HMMs nur ein einziges sprachspezifisches bzw. länderspezifisches HMM verwendet und dabei die Bezeichnungen der fremden Benutzersprachen mit dem sprachspezifischen Phonemsatz modelliert. Zur Erläuterung dient das folgende Beispiel für die deutsche Sprache, das dem Menü in Tabelle 1 nachempfunden ist. Die Wortmodelle sind in "phonetischer" Schreibweise:

**Tabelle 2**

| |
|---|
| / d eu t sh / |
| / f r o ng s ae / |
| / i ng l i sh / |
| / u k r ai n sk i j/ |
| / r o m a n e sh t sh / |

Hier entfällt die Notwendigkeit, ein multilinguales HMM zu verwenden oder Phonemsequenzen mit unterschiedlichen Phoneminventaren bei der Erkennung zu kombinieren.

Gemäß der einleitenden Problemstellung ist die Vorrichtung insbesondere ein mobiles Endgerät in Form eines Mobil- oder Schnurlostelefons, ein Headset oder der Server eines Call-Centers.

Bevorzugte Ausgestaltungen des erfindungsgemäßen Verfahrens ergeben sich analog zu den dargestellten bevorzugten Ausgestaltungen der erfindungsgemäßen Vorrichtung.

Weitere wesentliche Merkmale und Vorteile der Erfindung ergeben sich aus der Beschreibung eines Ausführungsbeispiels anhand der Zeichnung. Dabei zeigt:

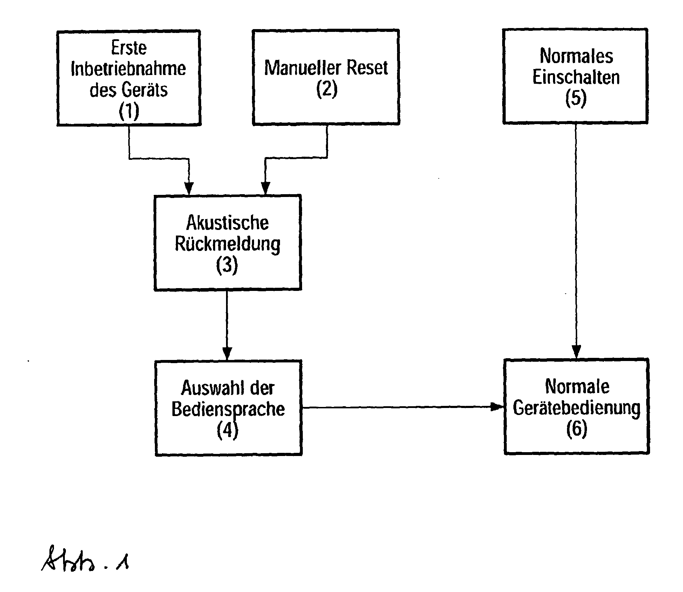

Figur 1 den Ablauf bei der Einstellung der Benutzersprache.

Die Vorrichtung kann in Form eines schnurlosen Headsets verwirklicht sein, das ausschließlich über Sprache gesteuert wird. Dies kann beispielsweise ein Headset sein, das über Bluetooth, Dect, GSM, UMTS, GAP oder einen anderen Übertragungsstandard mit oder ohne Kabel eine Verbindung zu einer Basis aufnimmt.

Das Headset weist eine On-/Off-Taste sowie eine so genannte "P2T-Taste" ("push-to-talk") auf, mit der der Audiokanal für ein bestimmtes Zeitfenster auf die Spracherkennungsmittel geschaltet wird. Die Kommandosteuerung des Headsets beinhaltet das kurze Drücken der P2T-Taste, ein Quittieren des Tastendrucks durch einen kurzen Piep-Ton und das anschließende Sprechen des gewünschten Kommandos, worauf die Vorrichtung entsprechend reagiert.

Beim ersten Einschalten der Vorrichtung (Schritt 1) bzw. nach einem Zurücksetzen der Vorrichtung (Schritt 2), was beispielsweise durch ein längeres Drücken auf die P2T-Taste hervorgerufen wird, befindet sich der Benutzer zunächst in der Benutzersprachauswahl. Dies wird dem Benutzer durch ein akustisches Signal (Schritt 3) mitgeteilt, das beispielsweise in einem längeren Piep-Ton oder einer mehrsprachigen Aufforderung zum Einsprechen der einzustellenden Benutzersprache besteht.

Der Benutzer spricht nun die Bezeichnung der einzustellenden Sprache in der einzustellenden Sprache in die Vorrichtung ein (Schritt 4). Die Spracherkennungsmittel der Vorrichtung erkennen nun die in der einzustellenden Benutzersprache gesprochene Bezeichnung der einzustellenden Benutzersprache, soweit es sich bei der einzustellenden Benutzersprache um eine der mehreren einstellbaren Benutzersprachen der Vorrichtung handelt. Daraufhin stellen die Benutzerspracheneinstellungsmittel der Vorrichtung die Benutzersprache der Vorrichtung auf die von den Spracherkennungsmitteln erkannte Benutzersprache ein, wodurch die Vorrichtung entsprechend initialisiert wird. Anschließend kann mit der Vorrichtung gearbeitet werden (Schritt 6), als ob sie normal eingeschaltet wurde (Schritt 5).

Bei der Korrektur von Spracherkennungs- und Bedienfehlern kann auf bewährte Mittel und Verfahren aus dem Stand der Technik zurückgegriffen werden.

Allen Ausführungsformen der Erfindung ist der herausragende Vorteil einer deutlichen Vereinfachung und Verkürzung der Bedienung der Vorrichtung gemeinsam. Weiterhin gibt es, sofern eine phonembasierte Erkennung verwendet wird, nicht die Notwendigkeit, Sprachkonserven in der Vorrichtung abzulegen. Die Tatsache, dass bereits phonembasierte akustische Ressourcen in der Vorrichtung vorhanden sind, wird dabei optimal ausgenutzt.

## Patentansprüche

1. Vorrichtung mit
- Spracherkennungsmitteln zum Erkennen einer in einer einzustellenden Benutzersprache gesprochenen Bezeichnung der einzustellenden Benutzersprache der Vorrichtung,
wobei mehrere einstellbare Benutzersprachen der Vorrichtung durch die Spracherkennungsmittel erkennbar sind, indem die Bezeichnung der jeweils einzustellenden Benutzersprache in der einzustellenden Benutzersprache gesprochen wird,
- Benutzerspracheneinstellungsmitteln zum Einstellen der Benutzersprache der Vorrichtung auf die von den Spracherkennungsmitteln erkannte Benutzersprache
- Mitteln zur Ausgabe einer Aufforderung zum Einsprechen der Bezeichnung der einzustellenden Benutzersprache.

2. Vorrichtung nach Anspruch 1,
**dadurch gekennzeichnet,**
**dass** die Spracherkennungsmittel einen Einzelworterkenner aufweisen.

3. Vorrichtung nach Anspruch 1,
**dadurch gekennzeichnet,**
**dass** die Spracherkennungsmittel einen phonembasierten Erkenner aufweisen.

4. Vorrichtung nach Anspruch 3,
**gekennzeichnet durch**
ein multilinguales Hidden-Markov-Modell, das von den Spracherkennungsmitteln verwendbar ist.

5. Vorrichtung nach Anspruch 3,
**gekennzeichnet durch**
ein kombiniertes Hidden-Markov-Modell, das Phonemsequenzen aus den mehreren erkennbaren Benutzersprachen enthält und von den Spracherkennungsmitteln verwendbar ist.

6. Vorrichtung nach Anspruch 5,
**dadurch gekennzeichnet,**
**dass** im kombinierten Hidden-Markov-Modell die Übereinstimmungsmaße für die Phonemsequenzen aus den mehreren erkennbaren Bediensprachen skaliert sind.

7. Vorrichtung nach Anspruch 3,
**gekennzeichnet durch**
ein sprachspezifisches Hidden-Markov-Modell, bei dem die Phoneme für die Bezeichnungen der mehreren erkennbaren Benutzersprachen mit dem sprachspezifischen Phonemsatz des sprachspezifischen Hidden-Markov-Modells modelliert sind.

8. Vorrichtung nach einem der vorhergehenden Ansprüche,
**dadurch gekennzeichnet,**
**dass** die Vorrichtung ein mobiles Endgerät ist.

9. Verfahren zum Einstellen einer Benutzersprache einer Vorrichtung,
- bei dem mehrere einstellbare Benutzersprachen durch eine Spracherkennung erkennbar sind, wenn die Bezeichnung der jeweils einzustellenden Benutzersprache in der einzustellenden Benutzersprache gesprochen wird,
- bei dem die in der einzustellenden Benutzersprache gesprochene Bezeichnung der einzustellenden Benutzersprache erkannt wird,
- bei dem die erkannte einzustellende Benutzersprache als Benutzersprache der Vorrichtung eingestellt wird,
- bei dem eine Aufforderung zum Einsprechen der Bezeichnung der einzustellenden Benutzersprache ausgegeben wird.

## Claims

1. Device comprising
- speech recognition means for recognising a designation of the user language of the device to be set, said designation being spoken in a user language to be set,
wherein a plurality of selectable user languages of the device can be recognised by the speech recognition means, the designation of the user language to be set in each case being spoken in the user language to be set,
- user language setting means for setting the user language of the device to the user language recognised by the speech recognition means,
- means for outputting a request to speak the designation of the user language to be set.

2. Device according to claim 1,
**characterised in that**
the speech recognition means has a single-word recogniser.

3. Device according to claim 1,
**characterised in that**
the speech recognition means has a phoneme-based recogniser.

4. Device according to claim 3,
**characterised by**
a multilingual Hidden Markov Model which can be used by the speech recognition means.

5. Device according to claim 3,
**characterised by**
a combined Hidden Markov Model which contains phoneme sequences from the plurality of recognisable user languages and can be used by the speech recognition means.

6. Device according to claim 5,
**characterised in that**
in the combined Hidden Markov Model, the degrees of matching for the phoneme sequences from the plurality of recognisable operator languages are scaled.

7. Device according to claim 3,
**characterised by**
a language-specific Hidden Markov Model in which the phonemes for the designations of the plurality of recognisable user languages are modelled using the language-specific phoneme set of the language-specific Hidden Markov Model.

8. Device according to any one of the preceding claims,
**characterised in that**
the device is a mobile terminal.

9. Method for setting a user language of a device,
- wherein a plurality of selectable user languages can be recognised by speech recognition if the designation of the user language to be set in each case is spoken in the user language to be set,
- wherein the designation of the user language to be set, said designation being spoken in the user language to be set, is recognised,
- wherein the recognised user language to be set is set as the user language of the device,
- wherein a request to speak the designation of the user language to be set is output.

## Revendications

1. Dispositif avec
- des moyens de reconnaissance vocale pour la reconnaissance d'une désignation, parlée dans une langue utilisateur à régler, de la langue utilisateur à régler du dispositif,
plusieurs langues utilisateur réglables du dispositif pouvant être identifiées par les moyens de reconnaissance vocale du fait que la désignation de la langue utilisateur à régler respectivement est parlée dans la langue utilisateur à régler,
- des moyens de réglage de la langue utilisateur pour le réglage de la langue utilisateur du dispositif sur la langue utilisateur reconnue par les moyens de reconnaissance vocale
- des moyens pour la sortie d'une invitation à entrer par la parole la désignation de la langue utilisateur à régler.

2. Dispositif selon la revendication 1,
**caractérisé en ce que**
les moyens de reconnaissance vocale présentent un identificateur de mot individuel.

3. Dispositif selon la revendication 2,
**caractérisé en ce que**
les moyens de reconnaissance vocale présentent un identificateur basé sur phonèmes.

4. Dispositif selon la revendication 3,
**caractérisé par**
un modèle de Hidden-Markov multilangues, qui peut être utilisé par les moyens de reconnaissance vocale.

5. Dispositif selon la revendication 3,
**caractérisé par**
un modèle de Hidden-Markov mixte, qui contient des séquences de phonème provenant des plusieurs langues utilisateur reconnaissables et peut être utilisé par les moyens de reconnaissance vocale.

6. Dispositif selon la revendication 5,
**caractérisé en ce que**,
dans le modèle de Hidden-Markov mixte, les cotes de concordance pour les séquences de phonème provenant des plusieurs langues de commande reconnaissables sont graduées.

7. Dispositif selon la revendication 3,
**caractérisé par**
un modèle de Hidden-Markov spécifique à la langue, dans lequel les phonèmes pour les désignations des plusieurs langues utilisateur reconnaissables sont modélisés avec l'ensemble de phonèmes spécifique à la langue du modèle de Hidden-Markov spécifique à la langue.

8. Dispositif selon l'une quelconque des revendications précédentes,
**caractérisé en ce que**
le dispositif est un terminal mobile.

9. Procédé pour le réglage d'une langue utilisateur d'un dispositif,
- dans lequel plusieurs langues utilisateurs réglables peuvent être identifiées par une reconnaissance vocale, lorsque la désignation de la langue utilisateur respective à régler est parlée dans la langue utilisateur à régler,
- dans lequel la désignation, parlée dans la langue utilisateur à régler, de la langue utilisateur à régler est reconnue,
- dans lequel la langue utilisateur reconnue à régler est réglée comme langue utilisateur du dispositif,
- dans lequel une invitation à entrer par la parole de la désignation de la langue utilisateur à régler est éditée.
